# FASCICULE DE BREVET EUROPEEN

(11) **EP 0 725 840 B1**
(45) Date de publication et mention de la délivrance du brevet: **23.07.1997**
(21) Numéro de dépôt: 94931634.3
(22) Date de dépôt: 26.10.1994
(51) Int. Cl.: C22B 9/02, C22B 21/06, C22B 26/22

(54) **POCHE DE FILTRATION DE METAL LIQUIDE SUR MEDIUM FILTRANT, A CHAUFFAGE AMELIORE**
FILTRIERPFANNE FÜR EINE METALLSCHMELZE, MIT EINEM FILTERMEDIUM AUSGERÜSTET UND EINER VERBESSERTEN HEIZUNGSANLAGE
LADLE FOR FILTERING LIQUID METAL ON A FILTER MEDIUM WITH IMPROVED HEATING

(30) Priorité: 27.10.1993 FR 9313034
(43) Date de publication de la demande: 14.08.1996
(73) Titulaire: ALUMINIUM PECHINEY, 92400 Courbevoie (FR); PECHINEY RHENALU, 92400 Courbevoie (FR)
(72) Inventeur: CLEMENT, Guillaume, F-38240 Meylan (FR)
(74) Mandataire: Mougeot, Jean-Claude
(86) Numéro de dépôt international: FR9401246
(87) Numéro de publication internationale: WO9512000

(56) Documents cités:
- EP-A- 0 291 580
- EP-A- 0 490 371
- DE-A- 3 151 434
- DE-U- 8 813 131
- US-A- 3 917 242

## Description

### DOMAINE TECHNIQUE

L'invention concerne une poche de filtration de métal liquide, notamment l'aluminium ou ses alliages, mais aussi le magnésium ou ses alliages, sur médium filtrant (en particulier un lit de gravier d'alumine), ladite poche ayant des performances améliorées grâce à un dispositif de chauffage particulier.

### ETAT DE LA TECHNIQUE

On sait qu'il est nécessaire de filtrer les métaux liquides, comme l'aluminium ou ses alliages, avant d'effectuer la coulée, et que cette filtration peut être effectuée sur un lit de gravier généralement d'alumine.

Généralement le lit filtrant de gravier comprend une couche de filtration proprement dite suffisamment épaisse enserrée entre deux couches de maintien plus minces et constituées de graviers plus grossiers. Le lit est contenu dans une poche, le métal liquide est alimenté par le haut et soutiré par le bas après avoir été filtré; le lit repose habituellement sur une grille de façon à laisser subsister un vide en fond de poche.

La mise en température du lit filtrant avant filtration peut se faire en transportant le lit dans une étuve avant sa mise en place dans la poche. Cette mise en température, de même que le maintien en température du lit pendant les périodes d'arrêt de filtration où le lit reste imprégné de métal liquide, peut aussi se faire à l'aide de brûleurs situés en-dessus du lit et/ou par chauffage à travers les parois de la poche, par exemple par des résistances noyées dans, ou situées à l'extérieur des, parois de telle sorte que les résistances ne soient en contact ni avec le lit, ni avec le métal liquide filtrant.

Les professionnels s'interdisent en général d'introduire des dispositifs de chauffage à l'intérieur du lit filtrant afin de ne pas y perturber l'écoulement du métal liquide (risque de passages préférentiels) pendant la filtration, ce qui aurait pour conséquence de diminuer la qualité de la filtration.

De tels modes de chauffage par rayonnement et/ou conduction conduisent à des durées de mise en température du lit excessives et à des gradients de températures également trop importants, à la fois dans le lit préchauffé avant introduction du métal liquide (y compris après de longues périodes de chauffage), et dans le lit rempli de métal liquide pendant les périodes de maintien en température correspondant aux arrêts de filtration. Ils sont, par exemple, d'au moins une centaine de °C et peuvent atteindre près de 200°C entre le point le plus froid et le plus chaud, même après plusieurs jours de préchauffage, et au moins une cinquantaine de °C après une période de maintien en température du métal liquide de plus de 6 h.

La demande européenne EP 0490371 décrit un autre mode de chauffage de métal liquide à filtrer passant dans une cuve comportant un premier filtre grossier puis un deuxième filtre fin ; il comporte un élément chauffant (20), pouvant être électrique, immergé dans le métal liquide à proximité de l'orifice d'alimentation et en amont du filtre grossier de façon à s'assurer que le métal à filtrer soit bien liquide.

Les gradients sont la source d'ennuis. Par exemple, la température la plus basse du lit doit être supérieure à une valeur limite en-dessous de laquelle on risque: de figer le métal liquide lors de la première imprégnation du lit, d'avoir une mauvaise imprégnation du lit filtrant ou de provoquer des précipitations de composés intermétalliques, tout cela pouvant entraîner un colmatage du filtre et une perte de la qualité du métal coulé; mais en même temps, la température la plus éleyée ne doit pas dépasser une valeur limite sous peine de provoquer une oxydation importante du métal liquide entraînant la formation préjudiciable de crasses et ainsi une pollution et une dégradation du métal coulé.

Ainsi, la demanderesse a recherché un moyen de pallier ces inconvénients sans pour autant augmenter exagérément la puissance de chauffage installée et/ou la durée de chauffage, tout en maîtrisant constamment la température du métal coulé.

En particulier, elle a recherché à diminuer ou supprimer le gradient de température entre le point le plus froid et le point le plus chaud (par exemple entre le bas et le haut) en période de préchauffage (avant imprégnation), mais surtout en période de maintien en température du lit imprégné de métal liquide (pendant les arrêts de filtration).

Elle a encore recherché à améliorer la qualité du métal filtré, en particulier après une période d'arrêt, en diminuant la quantité de crasses formées pendant la période de maintien en température.

### DESCRIPTION DE L'INVENTION

L'invention est une poche de filtration de métal liquide sur médium filtrant comportant une enceinte à l'intérieur de laquelle se trouve ledit médium filtrant reposant à sa partie basse sur une grille support, un moyen d'alimentation amenant le métal liquide à filtrer dans ledit médium filtrant, un moyen d'évacuation du métal liquide filtré, un premier dispositif de chauffage situé hors dudit médium, caractérisée en ce qu'elle comporte un deuxième dispositif de chauffage situé dans au moins un des moyens d'alimentation ou d'évacuation du métal liquide, à proximité du médium filtrant, ledit deuxième dispositif comportant au moins un thermoplongeur ayant un diamètre inférieur à 40 mm et une partie chauffante dissipant au moins 5 kw/m de longueur chauffante.

Si l'invention s'applique à tous média filtrants, elle s'applique en particulier aux poches dont le médium filtrant est un lit filtrant à base de gravier généralement d'alumine, qui sont particulièrement difficiles à chauffer correctement, mais également aux poches dont le médium filtrant est une dalle de mousse de céramique (connu sous le nom de CFF, ceramic foam filter) qui présentent les mêmes types de problèmes.

Les moyens d'alimentation et d'évacuation sont des moyens classiques de passage ou de circulation du métal liquide et comprennent typiquement des conduits, goulottes, chambres... Les dispositifs de chauffage sont en général du type à résistance électrique.

Le premier dispositif peut être un dispositif classique, comme cela a été vu plus haut, situé en dehors du médium filtrant et du métal liquide. Il peut en particulier comprendre des résistances électriques noyées dans les parois de l'enceinte ou situées à leur contact à l'extérieur. Mais il peut préférentiellement comprendre des résistances situées dans le couvercle de la poche, ou mieux des résistances (par exemple du type thermistor) situées à proximité du médium filtrant, de façon à ce qu'elles se trouvent immergées quand la poche est remplie de métal liquide. Il est alors situé en partie haute de la poche. Ces derniers dispositifs peuvent être avantageusement complétés et renforcés par des moyens faisant entrer en contact lesdites résistances avec un courant d'air qui ensuite traversera et chauffera le médium filtrant avant imprégnation par le métal liquide; ce courant d'air chauffé pourra, après passage dans le médium filtrant, être de nouveau préchauffé dans un dispositif de chauffage annexe et recyclé au contact desdites résistances; ce dispositif complémentaire de renfort permet à la fois de diminuer la durée de mise en température du médium et son gradient thermique.

La grille support sur laquelle repose le médium filtrant est en général implantée dans l'enceinte de façon à laisser subsister une zone libre en fond de poche sous le médium filtrant pour la circulation du métal liquide.

Quant au deuxième dispositif de chauffage selon l'invention, il est donc implanté également hors du médium filtrant et se trouve immergé dans le métal liquide après introduction de ce dernier dans la poche; il est typiquement d'encombrement réduit .

Ledit deuxième dispositif, comme d'ailleurs lesdites résistances situées à proximité du médium filtrant du premier dispositif, est situé dans un moyen de passage de métal liquide et se trouve le plus près possible du médium filtrant de façon à améliorer le rendement et l'efficacité du chauffage; il est ainsi préférable de l'implanter de telle sorte qu'il ne soit pas séparé du médium filtrant par un quelconque écran, par exemple par une cloison ou toute séparation isolante, etc...
Il est très avantageux de l'installer dans le moyen d'amenée de métal liquide à filtrer, bien sur à proximité immédiate du médium filtrant, ce qui permet de contrôler la température du métal liquide de façon très précise et modulable lorsqu'il pénètre dans le médium.
Le premier dispositif se trouve alors situé du côté de la sortie du métal liquide filtré et permet de mieux répartir le chauffage entre les deux dispositifs, mais surtout de mieux contrôler la sortie dudit métal liquide filtré et d'avoir une coulée de meilleure qualité en évitant les rebus.

Ledit deuxième dispositif de chauffage est avantageusement de dimensions réduites pour éviter entre autres de modifier les poches existantes et ne pas augmenter le volant de métal liquide dans la poche. Il est particulièrement avantageux d'utiliser au moins un thermoplongeur comportant une partie chauffante immergeable dans le métal liquide de faible diamètre, de préférence inférieur à 30 mm Cette partie chauffante comprend généralement une résistance électrique oyée dans une substance réfractaire, isolant électrique et bon conducteur thermique, le tout étant contenu dans une gaine bon conducteur thermique, de préférence en céramique frittée pour mieux résister au métal liquide, par exemple en alumine, zircone, alon, sialon, oxynitrure mixte d'Al et Mg, nitrures, etc...

La partie chauffante est prolongée, à l'extérieur de la poche, par une rehausse servant à la manutention et aux connexions électriques. Même avec une partie chauffante de petit diamètre, la puissance dissipée peut être importante ce qui permet d'améliorer les performances de la poche; elle est de préférence supérieure à 10 kW/m de partie chauffante, ou peut avantageusement atteindre et dépasser 20 kW/m; il est surprenant de noter que, même dans de telles conditions à haut flux énergétique, on n'observe pas de surchauffe du métal liquide avec des risques d'oxydation aggravés.

La poche de filtration selon l'invention est généralement de grande dimension et sert à traiter principalement l'aluminium ou ses alliages, mais également le magnésium ou ses alliages.

Quand le médium filtrant est un lit de gravier d'alumine, il comprend un lit filtrant proprement dit de granulométrie suffisamment fine pour opérer la filtration souhaitée, compris entre deux lits de confinement de plus grosse granulométrie, le tout reposant sur la grille support.

L'alimentation du médium en métal liquide peut se faire, à l'aide de conduits d'amenée, par le haut, le métal filtré étant évacué par le bas. Mais la poche selon l'invention est particulièrement adaptée à une alimentation par le bas avec circulation du métal liquide de bas en haut, un dispositif de chauffage étant alors avantageusement immergé vers le fond de la poche sous la grille support à proximité immédiate du médium filtrant, dans le métal liquide entrant dans ledit médium filtrant, l'autre dispositif de chauffage étant situé en partie haute de la poche à la sortie du métal filtré. Ce mode d'écoulement du type piston permet d'améliorer l'imprégnation du médium filtrant par le métal liquide lors de sa mise en fonction, mais aussi la régularité de filtration grâce au fait que les particules à filtrer ont tendance à rester dans le filtre par décantation naturelle.

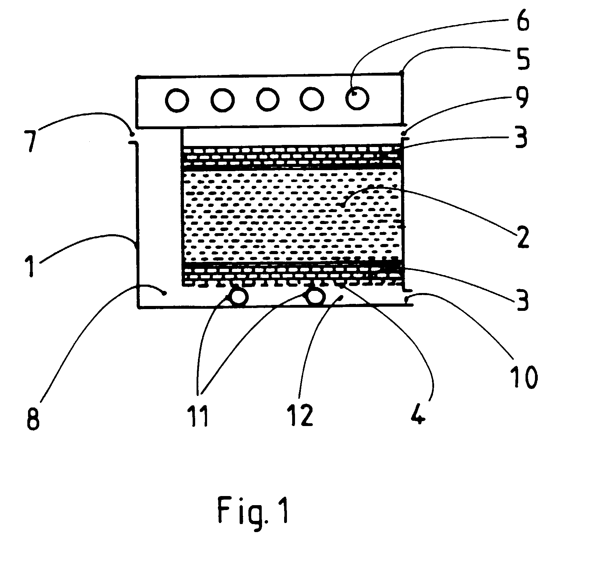

La figure 1 illustre une poche de filtration selon l'invention.

On voit en (1) l'enceinte de la poche, en (2) le lit de gravier filtrant maintenu entre deux couches (3) de graviers plus grossiers, l'ensemble reposant sur une grille (4) laissant un espace (12) la séparant du fond de l'enceinte et par où transite le métal liquide. Le lit est surmonté d'un premier dispositif de chauffage (5), par exemple des résistances (6) pouvant être situées dans le couvercle de la poche, destiné à préchauffer le lit filtrant (2,3) avant introduction du métal liquide ou à maintenir en température ledit lit et sa charge en métal liquide pendant les arrêts de filtration.

Un autre type de premier dispositif pourrait être utilisé (non représenté); il consiste à chauffer le lit par conduction et rayonnement à travers les parois de l'enceinte, par exemple à l'aide de résistances noyées dans lesdites parois ou situées à l'extérieur desdites parois.

Le deuxième dispositif de chauffage est représenté par deux thermoplongeurs (11) situés dans l'espace (12) situé sous la grille de support (4) du lit filtrant (2-3).

Selon un mode préférentiel de réalisation de l'invention, le métal liquide à filtrer arrive en (7), est acheminé sous le lit filtrant à l'aide du conduit (8), est filtré de bas en haut pour ressortir épuré en (9). Une filtration de haut en bas peut aussi être pratiquée, les thermoplongeurs étant dans ce cas situés dans le métal liquide à proximité du sommet du lit filtrant, mais pouvant également rester sous la grille, en aval du lit.

Pour améliorer le préchauffage du lit filtrant on peut, comme cela a été dit, faire entrer en contact avec les résistances (6) un courant d'air qui est introduit dans l'enceinte par l'ouverture (9) est ainsi réchauffé, traverse ensuite le lit filtrant (2-3) et sort par l'ouverture (10) prévue à cet effet; le résultat peut encore être amélioré en recyclant l'air sortant de (10), en le préchauffant dans un dispositif de chauffage annexe (non représenté) et en le réintroduisant dans l'enceinte comme indiqué ci-dessus.

Ainsi, la poche selon l'invention, qui comporte toujours au moins un moyen de chauffage immergé dans le métal liquide, de préférence situé dans l'alimentation en métal à filtrer, comme cela a été vu, permet de préchauffer le médium filtrant non seulement à l'aide d'un premier dispositif de chauffage (5-6), mais aussi à l'aide d'un deuxième dispositif de chauffage situé en amont ou en aval du médium filtrant; on peut alors ne pas utiliser le dispositif de renfort par circulation d'air. On obtient ainsi une diminution du gradient thermique dans le médium non encore imprégné tout en réduisant la durée de chauffage.

Elle permet également, lors de la phase d'imprégnation du médium filtrant par le métal liquide et grâce au dispositif de chauffage situé du côté de l'alimentation en métal, de moduler la température du métal entrant, à mesure qu'il pénètre dans le médium, de façon à effacer les effets des gradients thermiques pouvant encore subsister dans le médium après le préchauffage; on obtient alors une charge de métal de température homogène. Elle permet encore de contrôler de façon très précise la température du métal sortant de la phase d'imprégnation ou de filtration et d'éviter ainsi tous problèmes et rebus lors de la coulée, grâce au dispositif de chauffage situé en aval.

Mais elle permet surtout, lors des phases de maintien en température, où le métal liquide baigne à la fois le médium filtrant et le deuxième dispositif de chauffage, de supprimer pratiquement complètement le gradient de température dans la charge de métal tout en réduisant la part de chauffage apportée par le premier dispositif (5-6). Cette réduction de la part de chauffage entraîne une diminution spectaculaire de l'oxydation superficielle du métal au repos et donc de sa pollution par des crasses qui iraient détériorer la qualité des pièces coulées, tandis que la disparition du gradient de température supprime les problèmes de coulée liés à des températures de métal trop élevées.

Ainsi, l'invention montre, en plus d'un avantage lors du préchauffage, surtout un avantage pendant les régimes transitoires d'exploitation du filtre (imprégnation, redémarrage après arrêt) en obtenant en général une très bonne régularité de température du métal liquide filtré; on améliore ainsi la qualité du métal coulé.

Elle permet encore de piloter les températures d'entrée et de sortie de métal liquide du filtre, que ce soit pendant la phase d'imprégnation, pendant l'opération de filtration ou entre deux opérations de filtration, de façon très précise ce qui entraînera une très bonne qualité du métal coulé, de même qu'une simplification et une amélioration du suivi des opérations de coulée.

## Revendications

1. Poche de filtration de métal liquide sur médium filtrant comportant une enceinte à l'intérieur de laquelle se trouve ledit médium filtrant reposant à sa partie basse sur une grille support, un moyen d'alimentation amenant le métal liquide à filtrer dans le médium filtrant, un moyen d'évacuation du métal liquide filtré, un premier dispositif de chauffage situé hors dudit médium caractérisée en ce qu'elle comporte un deuxième dispositif de chauffage immergé situé dans au moins un des moyens d'alimentation ou d'évacuation du métal liquide, à proximité du médium filtrant, ledit deuxième dispositif comportant au moins un thermoplongeur ayant un diamètre inférieur à 40 mm et une partie chauffante dissipant au moins 5kW/m de longueur chauffante.

2. Poche selon la revendication 1 caractérisée en ce que le médium filtrant est un lit filtrant à base de gravier d'alumine.

3. Poche selon l'une quelconque des revendications 1 ou 2 caractérisée en ce que le thermoplongeur a un diamètre inférieur à 30 mm.

4. Poche selon l'une quelconque des revendications 1 à 3 caractérisée en ce que le thermoplongeur a une partie chauffante dissipant au moins 10 kW/m de longueur chauffante.

5. Poche selon l'une quelconque des revendications 1 à 4 caractérisée en ce que le deuxième dispositif est situé dans le conduit d'amenée de métal liquide.

6. Poche selon l'une quelconque des revendications 1 à 5, caractérisée en ce que le métal liquide circule de bas en haut dans le médium filtrant.

7. Poche selon l'une quelconque des revendications 1 à 6, caractérisée en ce que le deuxième dispositif de chauffage est situé sous la grille support du médium filtrant.

8. Poche selon l'une quelconque des revendications 1 à 7, caractérisée en ce que le premier dispositif de chauffage comprend des résistances situées dans le couvercle de la poche.

9. Poche selon la revendication 8, caractérisée en ce qu' un courant d'air est réchauffé au contact des résistances situées dans le couvercle et traverse le lit filtrant avant imprégnation par le métal liquide.

10. Procédé de filtration de l'aluminium liquide ou ses alliages et du magnésium liquide ou ses alliages utilisant une poche de filtration selon l'une quelconque des renvendications 1 à 9.

## Patentansprüche

1. Pfanne zum Filtrieren einer Metallschmelze auf einem Filtermedium, die eine Wandung, im Inneren welcher sich das an seinem unteren Teil auf einem Trägergitter ruhende Filtermedium befindet, ein die zu filtrierende Metallschmelze in das Filtermedium einführendes Einspeisungsmittel, ein Mittel zum Abführen der filtrierten Metallschmelze und eine erste Heizeinrichtung, die sich außerhalb des Mediums befindet, aufweist,
dadurch gekennzeichnet,
daß sie eine zweite, eingetauchte Heizeinrichtung aufweist, die in wenigstens einem der Einspeisungs- oder Abführungsmittel der Metallschmelze in der Nähe des Filtermediums angeordnet ist, welche zweite Heizeinrichtung wenigstens einen Heizstab mit einem Durchmesser unter 40 mm und einen Heizteil aufweist, der wenigstens 5 kW/m Heizlänge abgibt.

2. Pfanne nach dem Anspruch 1,
dadurch gekennzeichnet,
daß das Filtermedium ein Filterbett auf Basis von Aluminiumoxidsplitt ist.

3. Pfanne nach irgendeinem der Ansprüche 1 oder 2,
dadurch gekennzeichnet,
daß der Heizstab einen Durchmesser unter 30 mm hat.

4. Pfanne nach irgendeinem der Ansprüche 1 bis 3,
dadurch gekennzeichnet,
daß der Heizstab einen wenigstens 10 kW/m Heizlänge abgebenden Heizteil hat.

5. Pfanne nach irgendeinem der Ansprüche 1 bis 4,
dadurch gekennzeichnet,
daß die zweite Einrichtung in der Metallschmelzenein-führungsleitung angeordnet ist.

6. Pfanne nach irgendeinem der Ansprüche 1 bis 5,
dadurch gekennzeichnet,
daß die Metallschmelze von unten nach oben im Filtermedium strömt.

7. Pfanne nach irgendeinem der Ansprüche 1 bis 6,
dadurch gekennzeichnet,
daß die zweite Heizeinrichtung unter dem Trägergitter des Filtermediums angeordnet ist.

8. Pfanne nach irgendeinem der Ansprüche 1 bis 7,
dadurch gekennzeichnet,
daß die erste Heizeinrichtung Widerstände aufweist, die im Deckel der Pfanne angeordnet sind.

9. Pfanne nach dem Anspruch 8,
dadurch gekennzeichnet,
daß ein Luftstrom im Kontakt mit den im Deckel angeordneten Widerständen aufgeheizt wird und das Filterbett vor Tränkung mit der Metallschmelze durchströmt.

10. Verfahren zum Filtrieren von flüssigem Aluminium oder seinen Legierungen und von flüssigem Magnesium oder seinen Legierungen unter Verwendung einer Filtrierpfanne nach irgendeinem der Ansprüche 1 bis 9.

## Claims

1. Ladle for the filtration of liquid metal over a filter medium comprising a chamber within which there is located said filter medium resting on a supporting grid at its lower portion, a supply means supplying the liquid metal to be filtered into said filter medium, a means for removing the filtered liquid metal, a first heater located outside said medium, characterised in that it comprises a second immersed heater located in at least one of the means for the supply or removal of liquid metal in the vicinity of the filter medium, said second device comprising at least one immersion heater having a diameter smaller than 40 mm and a heating portion dissipating at least 5 kW/m of length.

2. Ladle according to claim 1, characterised in that the filter medium is a filtering bed based on alumina gravel.

3. Ladle according to any one of claims 1 or 2, characterised in that the immersion heater has a diameter smaller than 30 mm.

4. Ladle according to any one of claims 1 to 3, characterised in that the immersion heater has a heating portion dissipating at least 10 kW/m of heating length.

5. Ladle according to any one of claims 1 to 4, characterised in that the second device is located in the liquid metal supply conduit.

6. Ladle according to any one of claims 1 to 5, characterised in that the liquid metal circulates from bottom to top in the filter medium.

7. Ladle according to any one of claims 1 to 6, characterised in that the second heater is located beneath the grid supporting the filter medium.

8. Ladle according to any one of claims 1 to 7, characterised in that the first heater comprises resistors located in the lid of the ladle.

9. Ladle according to claim 8, characterised in that an airstream is heated in contact with the resistors located in the lid and traverses the filter bed before impregnation with the liquid metal.

10. Process for the filtration of liquid aluminium or its alloys and of liquid magnesium or its alloys employing a filtering ladle according to any one of claims 1 to 9.
